Europäisches Patentamt

European Patent Office

Office européen des brevets

(19)

(11) Veröffentlichungsnummer: **0 239 800**

**A2**

(12) # EUROPÄISCHE PATENTANMELDUNG

(21) Anmeldenummer: **87102845.2**

(22) Anmeldetag: **27.02.87**

(51) Int. Cl.⁴: **H04N 5/44**

(30) Priorität: **29.03.86 DE 3610715**

(43) Veröffentlichungstag der Anmeldung:
**07.10.87 Patentblatt 87/41**

(84) Benannte Vertragsstaaten:
**DE FR GB IT NL**

(71) Anmelder: **ROBERT BOSCH GMBH**
**Postfach 50**
**D-7000 Stuttgart 1(DE)**

(72) Erfinder: **Hentschel, Christian, Dipl.-Ing.**
**Katharinenstrasse 5**
**D-3300 Braunschweig(DE)**

(54) **Verfahren und Schaltungsanordnung zur flimmerfreien Wiedergabe eines Videosignals.**

(57) Bei einem Verfahren zur flimmerfreien Wiedergabe eines Videosignals, bei welchem Vollbilder aus jeweils zwei Teilbildern nach dem Zwischenzeilen-Verfahren zusammengesetzt sind, wird aus dem Videosignal ein abgeleitetes Videosignal gebildet, bei dem die Teilbildfrequenz und die Vollbildfrequenz jeweils um einen Faktor gegenüber denjenigen des Videosignals vergrößert sind. Die Teilbilder des abgeleiteten Videosignals werden durch Zeitkompression sequentiell aus jeweils einem Teilbild des Videosignals mit gleicher Rasterlage und durch nichtlineare Mischung aus mehreren aufeinander folgenden Teilbildern des Videosignals gebildet.

Fig. 3

EP 0 239 800 A2

## Verfahren und Schaltungsanordnung zur flimmerfreien Wiedergabe eines Videosignals

Die Erfindung geht aus von einem Verfahren nach der Gattung des Hauptanspruchs.

Die Qualität einer Fernsehübertragung wird wesentlich von Systemparametern, wie Bildfrequenz, Zeilenzahl und Signalbandbreite, beeinflußt. Dabei ist für eine flimmerfreie Wiedergabe sowie für eine Wiedergabe von Bewegungsvorgängen eine nicht zu niedrige Bildfrequenz erforderlich, während im Interesse einer möglichst hohen Auflösung eine möglichst hohe Zeilenzahl erforderlich ist. Beide Forderungen zielen auf eine hohe Bandbreite ab.

Bei der Festlegung der heute üblichen Fernsehsysteme wurden Kompromisse zwischen einem durch die damals gegebenen technischen Möglichkeiten bedingten Aufwand und einer möglichst hohen Bildqualität geschlossen. Eine Qualitätsverbesserung wird dabei durch das sogenannte Zwischenzeilen-Verfahren erreicht, bei welchem jeweils ein aus einer ungeraden Anzahl von Zeilen bestehendes Fernsehbild (Vollbild) aus zwei ineinander verschachtelten Teilbildern besteht. Bei einem genügend großen Betrachtungsabstand unterscheidet das Auge nicht die beiden Teilbilder voneinander, so daß bezüglich des Flimmerns von einer doppelt so großen Bildwiederholfrequenz ausgegangen werden kann. Bei dem europäischen Fernsehsystem wird damit nicht die Bildwiederholfrequenz von 25 Hz, sondern die Teilbildfrequenz von 50 Hz bezüglich des Flimmerns wirksam, welche jedoch nicht hoch genug ist, um auch bei großen hellen Flächen Flimmern zu vermeiden.

Die Annahme, daß die Teilbildfrequenz für das Flimmern maßgebend ist, gilt jedoch nur unter bestimmten Voraussetzungen. Insbesondere gilt sie dann nicht, wenn Strukturen der zu übertragenden Vorlagen in der Größenordnung einer Zeilenbreite liegen oder einen kontrastreichen Übergang in vertikaler Richtung bilden. So wird beispielsweise eine horizontal verlaufende Kante, sofern sie einen genügend scharfen Helligkeitsübergang darstellt, bei der von oben nach unten fortschreitenden zeilenweisen Abtastung von einer Zeile eines ersten Teilbildes nicht erfaßt, dann von der zeitlich darauffolgenden Zeile des gleichen Teilbildes erfaßt und bei der Abtastung des nächsten Teilbildes von der zwischen beiden Zeilen liegenden Zeile des nächsten Teilbildes ebenfalls erfaßt. Da die einzelnen Zeilen nur mit einer Folgefrequenz von 25 Hz abgetastet, übertragen und wiedergegeben werden, erscheint die Kante im 25 Hz-Rhythmus um eine Zeilenbreite auf-und abzuspringen. Dieses sogenannte Kantenflackern kann bei entsprechenden Vorlagen äußerst störend in Erscheinung treten.

Weitere Störungen, welche durch das Zwischenzeilen-Verfahren sowohl bei ruhenden als auch bei bewegten Bildvorlagen auftreten können, brauchen im Zusammenhang mit der vorliegenden Erfindung im einzelnen nicht behandelt zu werden.

Das erfindungsgemäße Verfahren mit den kennzeichnenden Merkmalen des Hauptanspruchs hat demgegenüber den Vorteil, daß Flimmereffekte wesentlich verringert werden. Es vermeidet Kantenflackern und reduziert das Zwischenzeilenflimmern. Als weiterer Vorteil ist anzusehen, daß durch die erfindunsgemäßen Maßnahmen kein Verlust an vertikaler Auflösung bei ruhenden Bildvorlagen auftritt und daß eine gute Wiedergabe von bewegten Bildvorlagen erfolgt.

Obwohl eine Ableitung aller Teilbilder durch nichtlineare Mischung möglich ist, wird eine bessere Berücksichtigung von bewegten Vorlagen gemäß einer Weiterbildung der Erfindung dadurch erreicht, daß die Teilbilder des abgeleiteten Videosignals sequentiell aus jeweils einem Teilbild des Videosignals mit gleicher Rasterlage und durch nichtlineare Mischung aus mehreren aufeinander folgenden Teilbildern des Videosignals gebildet werden.

Durch die in den Unteransprüchen aufgeführten Maßnahmen sind vorteilhafte Weiterbildungen und Verbesserungen der im Hauptanspruch angegebenen Erfindung möglich.

Besonders vorteilhaft ist, zur nichtlinearen Mischung jeweils das Signal weiterzuleiten, dessen Amplitudenwert zwischen denjenigen der anderen Signale liegt. Damit wird die Wiedergabe sowohl an ruhende Bildvorlagen als auch an bewegte Bildvorlagen angepaßt, ohne daß eine aufwendige Bewegungsdetektion notwendig ist.

Ein Ausführungsbeispiel der Erfindung ist in der Zeichnung an Hand mehrerer Figuren dargestellt und in der nachfolgenden Beschreibung näher erläutert. Es zeigt:

Fig. 1 eine schematische Darstellung der zeitlichen Lage der Teilbilder des Videosignals und der Teilbilder des abgeleiteten Videosignals,

Fig. 2 eine ebenfalls schematische Darstellung zur Erläuterung der Ableitung zweier Teilbilder des abgeleiteten Videosignals aus jeweils drei Teilbildern des Videosignals,

Fig. 3 ein Blockschaltbild einer Anordnung zur Durchführung des erfindungsgemäßen Verfahrens,

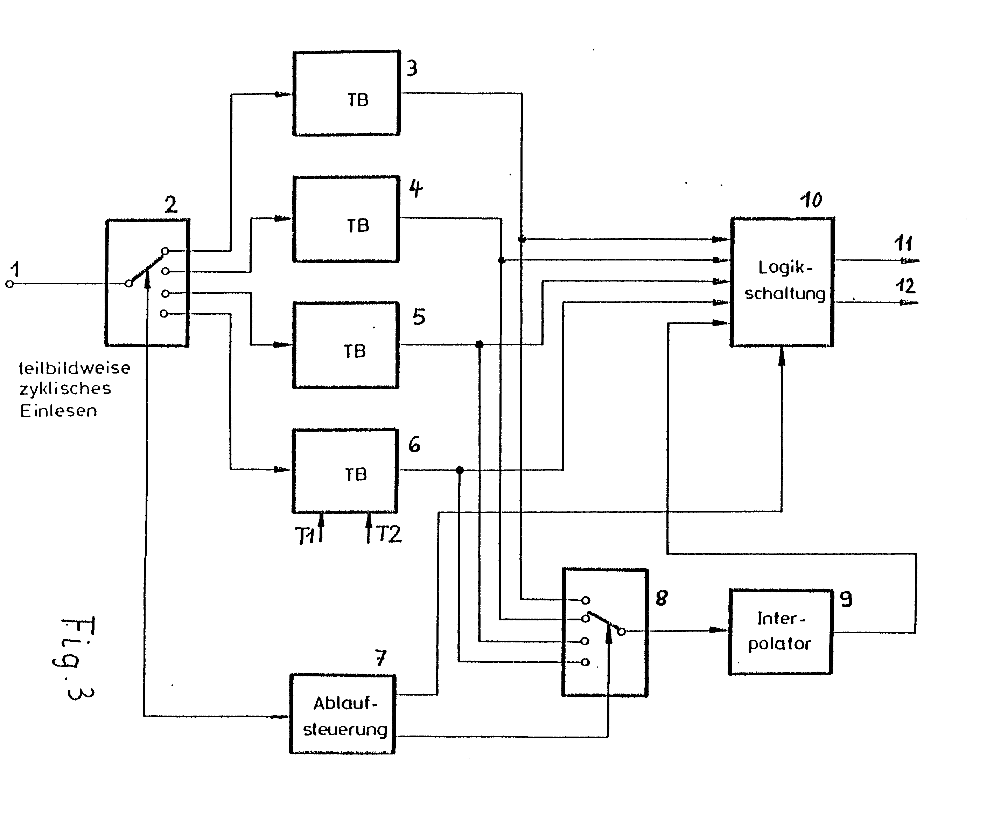

4. einen Teil der Anordnung nach Fig. 3 in detaillierter Darstellung,

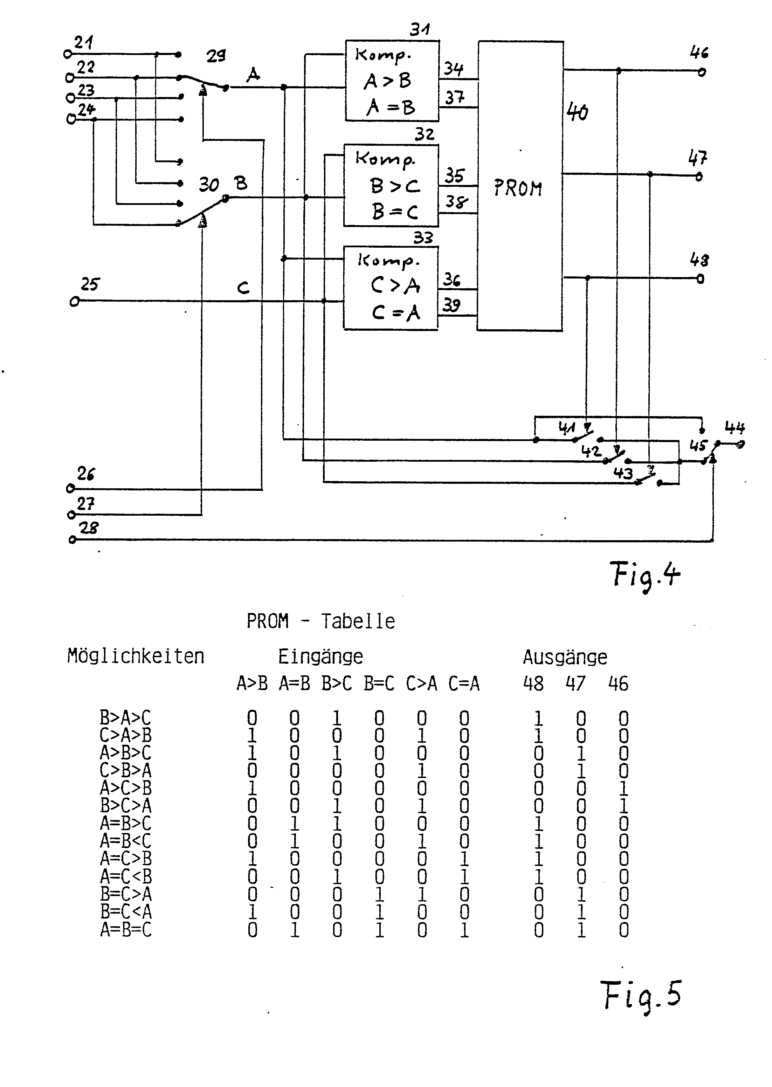

Fig. 5 eine Tabelle, welche in einem Nur-Lese-Speicher der Anordnung nach Fig. 4 abgelegt ist,

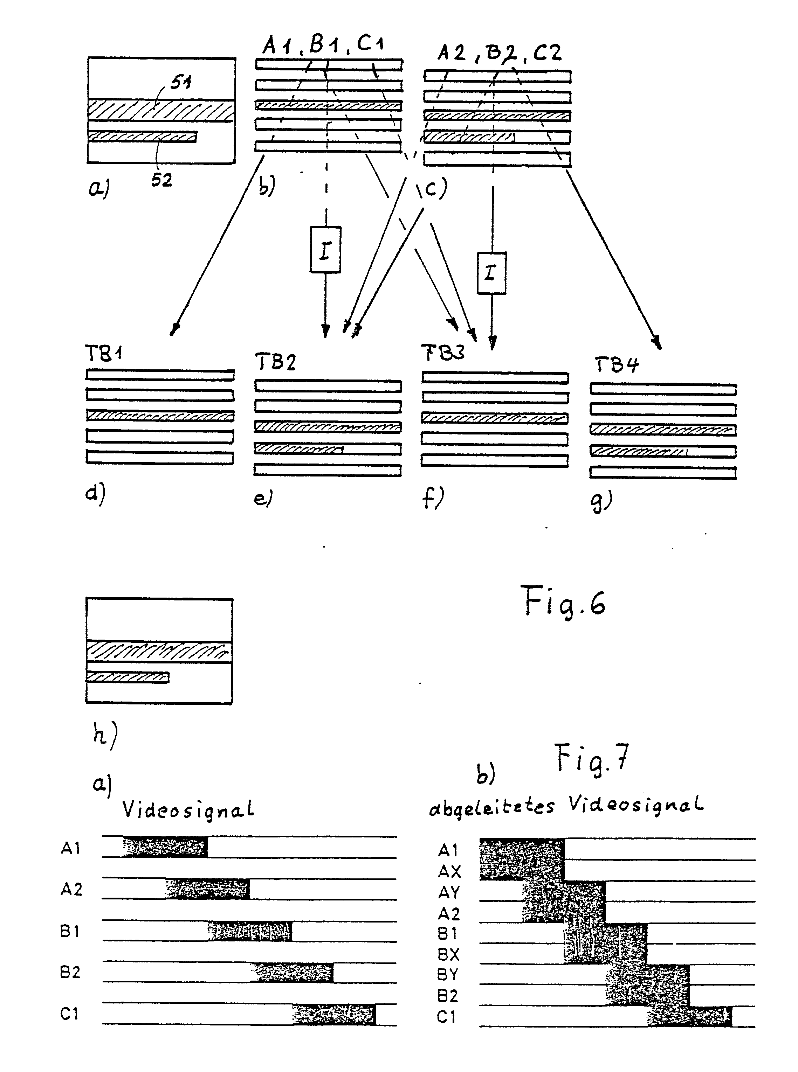

Fig. 6 bis Fig. 8 schematisch die Wiedergabe einer ruhenden Vorlage und jeweils einer Vorlage mit horizontaler und mit vertikaler Bewegung.

Gleiche Teile sind in den Figuren mit gleichen Bezugzeichen versehen.

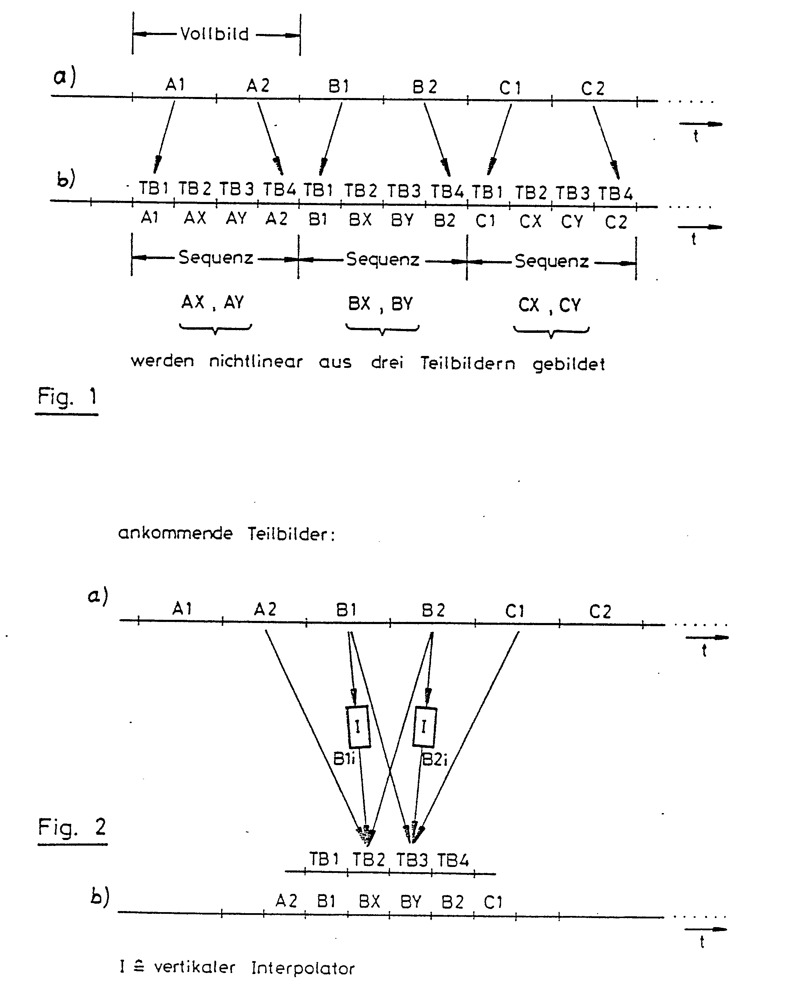

Auf der oberen Geraden a) der Fig. 1 sind Zeitabschnitte dargestellt, welche Teilbildern A1, A2, B1, B2, C1 und C2 des Videosignals entsprechen. Zwei dieser "ankommenden Teilbilder" bilden jeweils ein Vollbild. Dabei beinhaltet beispielsweise das Teilbild A1 die ungeradzahligen Zeilen, während das Teilbild A2 die geradzahligen Zeilen enthält. Bei einem Videosignal nach der europäischen Fernsehnorm entspricht eine Teilbildperiode 20 ms und eine Vollbildperiode 40 ms.

Auf der Geraden b) der Fig. 1 sind Teilbilder aufgetragen, welche durch eine Umwandlung nach dem erfindungsgemäßen Verfahren entstehen. Dabei ist die Teilbildfrequenz doppelt so groß, die Periodendauer also halb so groß. Zur Wiedergabe des abgeleiteten Videosignals ist eine Wiedergabeanordnung erforderlich, bei welcher die Vertikalfrequenz und die Horizontalfrequenz jeweils doppelt so hoch wie bei herkömmlichen Wiedergabeanordnungen sind.

Einem Vollbild des Videosignals gemäß Zeile a) steht also eine Sequenz von 4 Teilbildern des abgeleiteten Videosignals gemäß Zeile b) gegenüber. Zur Verdeutlichung sind die Teilbilder einer Sequenz jeweils mit TB1 bis TB4 bezeichnet. Bezüglich der Lage innerhalb des Vollbildrasters, also ob ein Teilbild die ungeradzahligen und die gradzahligen Zeilen umfaßt, entsprechen sich die Teilbilder, A1, TB1 und TB3 einerseits sowie die Teilbilder A2, TB2 und TB4 andererseits. Die Teilbilder TB1 und TB2 bilden also ein Vollbild, während die Teilbilder TB3 und TB4 ein anderes Vollbild bilden.

Das Teilbild TB1 des abgeleiteten Videosignals wird durch Zeitkompression aus dem Teilbild A1 gewonnen. Der Inhalt A1 des Teilbildes TB1 entspricht also dem Teilbild A1. Ebenfalls durch Zeitkompression wird der Inhalt A2 des Teilbildes TB4 vom Teilbild A2 abgeleitet. Beides ist in Fig. 1 durch entsprechende Pfeile gekennzeichnet. In der darauf folgenden Sequenz werden die Teilbilder des abgeleiteten Videosignals ebenso aus den Teilbildern B1, B2, C1 und C2 des Videosignals gebildet.

Der Inhalt AX und AY der Teilbilder TB2 und TB3 wird aus dem Inhalt dreier aufeinander folgender Teilbilder durch nichtlineare Mischung abgeleitet, was schematisch in Fig. 2 dargestellt ist. Und zwar wird der Inhalt BX des Teilbildes TB2 aus den Inhalten der ankommenden Teilbilder A2, B1 und B2 des Videosignals gewonnen. Dabei entsprechen die Teilbilder A2 und B2 bezüglich ihrer Rasterlage dem Teilbild TB2, weisen also Zeilen auf, welche die gleiche Lage innerhalb des Rasters einnehmen.

Das Teilbild B1 hat jedoch eine von der des Teilbildes TB2 abweichende Rasterlage. Um für das Teilbild TB2 Signale zu erhalten, welche der Rasterlage des Teilbildes TB2 entsprechen, werden die Signale des Teilbildes B1 über einen Zeileninterpolator zur Bildung des Signals B1i geleitet. Das Signal B1i entspricht beispielsweise dem Mittelwert des Signals zweier aufeinander folgender Zeilen des Teilbildes B1 und stellt somit eine Annäherung an das Signal der dazwischenliegenden Zeile eines Teilbildes mit der Rasterlage des Teilbildes TB2 dar. Für den Interpolator sind auch höhere und niedrigere Ordnungen denkbar.

Die nichtlineare Mischung von A2, B1i und B2 erfolgt mit Hilfe eines sogenannten Medianfilters derart, daß jeweils dasjenige Signal zur Bildung der Signale für das Teilbild TB2 benutzt wird, dessen Amplitudenwert jeweils zwischen den Amplitudenwerten der anderen beiden Signale liegt. Sind die Amplitudenwerte zweier Signale untereinander gleich, so wird eines dieser Signale für das Teilbild TB2 benutzt. Der Inhalt des Teilbildes TB3 wird entsprechend der Beschreibung des Teilbildes TB2 gewonnen.

Fig. 3 zeigt eine Anordnung zur Durchführung des erfindungsgemäßen Verfahrens, welcher bei 1 das wiederzugebende Videosignal zugeführt wird. Mit Hilfe einer Umschalteinrichtung wird das videosignal in zyklisher Reihenfolge jeweils für die Dauer eines Teilbildes den Teilbildspeichern 3, 4, 5, 6 zugeführt. Da sämtliche praktisch angewendeten Teilbildspeicher die Videosignale in digitaler Form speichern, wird auch hier von digitalen Speichern ausgegangen, wozu das Videosignal bei 1 bereits als digitales Videosignal zugeführt ist.

Den Speichern 3, 4, 5, 6 wird zum Einschreiben der Videosignale ein Taktsignal T1 und zum Auslesen ein Taktsignal T2 zugeführt. Die Erzeugung der Taktsignale T1 und T2 erfolgt in an sich bekannter Weise. Zum Verständnis der vorliegenden Erfindung ist es lediglich von Bedeutung, daß zur Erzielung der Zeitkompression das Taktsignal T2 eine doppelt so hohe Frequenz wie das Taktsignal T1 aufweist. Ferner ist bei der Adressierung der Speicher 3, 4, 5, 6 beim Auslesen ein Zeitversatz gegenüber dem Einschreiben zu berücksichtigen, welcher beispielsweise so groß ist, daß die Signale des Teilbildes A2 (Fig. 2) zur Bildung des Teilbildes TB2 erst ausgelesen werden, wenn auch die Signale des Teilbildes B2 vorliegen. Insofern ergibt sich ein zeitlicher Versatz zwischen dem abgeleiteten Videosignal und dem Videosignal, der in den Figuren 1 und 2 der Übersichtlichkeit halber nicht dargestellt ist.

Die Umschalteinrichtung 2 sowie andere zeitliche Vorgänge werden von einer Ablaufsteuerschaltung 7 gesteuert. Über eine Umschalteinheit 8 werden die Ausgänge der Teilbildspeicher 3, 4, 5, 6 mit dem Eingang eines Interpolators 9 verbunden, welcher beispielsweise aus einer Einzeilenverzögerung und einer Addierschaltung besteht.

Sowohl die Ausgänge der Teilbildspeicher 3, 4, 5, 6 sowie der Ausgang des Interpolators 9 sind mit Eingängen einer Logikschaltung 10 verbunden. Die Umschalteinheit 8 und die Logikschaltung 10 werden nun von der Ablaufsteuerschaltung 7 derart angesteuert, daß jeweils zwei Teilbilder gleicher Rasterlage und das dazwischenliegende Teilbild in anderer Rasterlage einem in der Logikschaltung 10 enthaltenen Medianfilter zugeführt werden.

Wie im Zusammenhang mit Fig. 2 erläutert, wird das Signal mit dem mittleren Amplitudenwert ausgewählt und steht am Ausgang 11 an. Von dort aus kann es in an sich bekannter Weise einer Wiedergabeanordnung, beispielsweise einem Videomonitor, zugeführt werden, welche - wie bereits erwähnt - mit doppelter Zeilen-und doppelter Bildfrequenz arbeitet.

Bei den bisherigen Erläuterungen wurde der Einfachheit halber davon ausgegangen, daß es sich bei dem Videosignal um ein monochromes Fernsehsignal handelt. Dieses kann jedoch auch das Leuchtdichtesignal eines Farbfernsehsystems sein. Das dazugehörige Farbartsignal kann dann in ähnlicher Weise wie das Leuchtdichtesignal verarbeitet werden, wobei es sich jedoch empfiehlt, die Umschaltung zwischen den zu mischenden Signalen gleichzeitig mit der Umschaltung des Leuchtdichtesignals vorzunehmen, damit das Luminanzsignal und das Chrominanzsignal stets in gleicher Weise verarbeitet werden. Hierzu können der Logikschaltung 10 an einem zweiten Ausgang 12 Steuersignale entnommen werden, die einer der Anordnung nach Fig. 3 ähnlichen Anordnung in einem Farbartkanal zugeführt werden, bei welcher die Logikschaltung 10 des Farbartkanals durch eine einfache Umschaltung ersetzt ist. Es ist außerdem möglich, den Interpolator 9 des Farbartkanals einfacher zu realisieren, beispielsweise durch eine einfache Zeilenwiederholung.

Fig. 4 stellt ein Blockschaltbild eines Ausführungsbeispiels der Logikschaltung 10 (Fig. 3) dar. Den Eingängen 21, 22, 23, 24 wird jeweils von einem Teilbildspeicher 3, 4, 5, 6 (Fig. 3) ein Videosignal zugeführt. Über einen Eingang 25 gelangt das Aus gangssignal des Interpolators 9 (Fig. 3) zur Schaltung nach Fig. 4. Schließlich ist über die Eingänge 26, 27, 28 die Ablaufsteuerschaltung 7 (Fig. 3) mit der Logikschaltung verbunden. Mit Hilfe der Umschalter 29, 30 werden jeweils zwei der ankommenden Teilbilder ausgewählt. Und zwar werden jeweils diejenigen ausgewählt, welche jeweils demjenigen Teilbild vorangehen und folgen, dessen Signale über den Interpolator 9 geführt werden (siehe Fig. 2).

Die Signale der ausgewählten Teilbilder werden im folgenden A und B und das Ausgangssignal des Interpolators C genannt. Die Amplituden der Signale A, B und C werden mit Hilfe der Komparatoren 31, 32, 33 paarweise miteinander verglichen. Die Komparatoren 31, 32, 33 weisen jeweils zwei Eingänge für die zu vergleichenden Signale und zwei Ausgänge auf. Dabei wird an jeweils einem ersten Ausgang 34, 35, 36 eine logische 1 abgegeben, wenn eines der Signale entsprechend den Darstellungen in Fig. 4 größer als das andere ist. Bei Gleichheit der Signale wird von den Ausgängen 37, 38, 39 jeweils eine logische 1 abgegeben.

Die Ausgangssignale der Komparatoren 31, 32, 33 werden einem Nur-Lese-Speicher (PROM) 40 zugeführt, dessen Ausgänge mit Steuereingängen von Schaltern 41, 42, 43 verbunden sind, welche in Abhängigkeit von den Vergleichsergebnissen entweder das videosignal B eines Teilbildes, das Signal A oder das interpolierte Signal C zum Ausgang 44 der Logikschaltung gemäß Fig. 4 weiterleiten. Zwischen den Schaltern 41, 42, 43 und dem Ausgang 44 ist noch ein weiterer Schalter 45 angeordnet, welcher über den Eingang 28 von der Ablaufsteuerschaltung 7 (Fig. 3) derart gesteuert wird, daß er während der Teilbilder TB1 und TB4 (Fig. 1) die obere Stellung und während der Teilbilder TB2 und TB3 die untere Stellung einnimmt. Durch eine entsprechende Steuerung der Schalter 29, 30 kann der Schalter 45 auch entfallen.

Den Ausgängen 46, 47, 48 können Schaltsignale für entsprechende Schalter in einem nicht dargestellten Farbartkanal entnommen werden.

Fig. 5 zeigt eine geeignete im PROM 40 abgelegte Tabelle. Bei Verschiedenheit der Amplituden aller drei zu vergleichenden Signale wird jeweils dasjenige mit der mittleren Amplitude ausgewählt. Sind zwei Amplituden gleich, so wird eines der Signale mit gleicher Amplitude weitergeleitet, während bei Gleichheit aller Signale ein beliebig vorgebbares Signal zur Bildung des abgeleiteten Videosignals herangezogen wird.

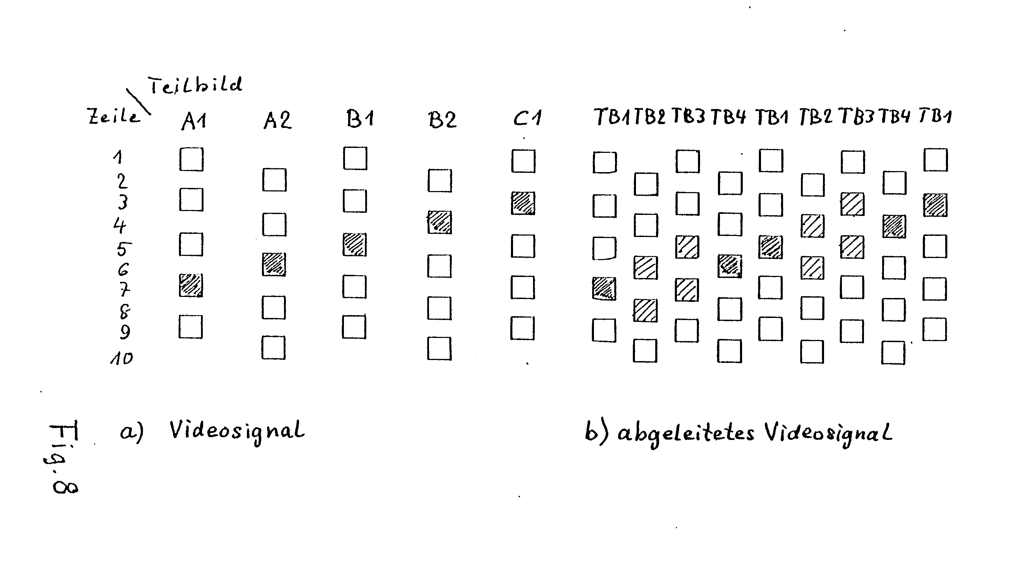

An Hand von verschiedenen Beispielen wird im folgenden die Wirkung des erfindungsgemäßen Verfahrens auf die Wiedergabe von verschiedenen Bildinhalten erläutert. Dabei sind folgende Beispiele dargestellt: eine ruhende Bildvorlage (Fig. 6), eine Bildvorlage mit horizontaler Bewegung (Fig. 7) und eine Bildvorlage mit vertikaler Bewegung (Fig. 8).

Fig. 6a) zeigt eine Vorlage, welche der Einfachheit halber nur mit 10 Zeilen abgetastet wird, die aus zwei horizontalen Streifen 51, 52 besteht. Die Halbbilder A1, B1, C1, welche die ungeradzeiligen Zeilen umfassen, sind in Fig. 6b) und die Halbbilder A2, B2, C2, welche die geradzahligen Zeilen umfassen, in Fig. 6c) dargestellt. Aus den Signalen dieser Teil bilder werden nun durch das erfindungsgemäße Verfahren die in den Figuren 6d) bis g) dargestellten Teilbilder TB1 bis TB4 erzeugt. Dabei weisen die Teilbilder TB1 und TB4 die gleichen Inhalte wie die Teilbilder B1 und B2 auf, während die Teilbilder TB2 und TB3 aus Signalen gebildet werden, welche wie oben beschrieben das Medianfilter durchlaufen haben. Dabei ist entsprechend der Darstellung nach Fig. 2 dieser Vorgang auch in Fig. 6 mit Pfeilen dargestellt. Da aufgrund der Voraussetzung, daß es sich hier um ein ruhendes Bild handelt, die Signale der Teilbilder A2 und B2 gleich sind, wird eines von diesen Signalen für das Teilbild TB2 verwendet. Das Teilbild TB2 entspricht daher den in Fig. 6c) gezeigten Teilbildern A2 und B2.

Zur Ableitung der Signale für das Teilbild TB3 werden die Signale des Teilbildes B2 über einen Interpolator geleitet, während die Signale der Teilbilder B1 und C1 direkt dem Medianfilter zugeleitet werden. Da letztere wiederum voraussetzungsgemäß untereinander gleich sind, entspricht bei der ruhenden Vorlage das Teilbild TB3 des abgeleiteten Videosignals in Teilbildern B1 bzw. C1.

Das Beispiel gemäß Fig. 6 zeigt also, daß bei einer ruhenden Vorlage keine Veränderung des Bildinhaltes auftritt und daß lediglich die Wiederholfrequenz der Bildwiedergabe verdoppelt wird. Durch die Wiedergabe der aufeinander folgenden Teilbilder auf einem Bildschirm ergibt sich dann das in Fig. 6h) dargestellte Bild der Vorlage.

Zur Erläuterung der Vorgänge bei der Wiedergabe einer Vorlage mit horizontaler Bewegung sind in Fig. 7a) Bildinhalte mehrerer Teilbilder des Videosignals schematisch dargestellt, wobei der Darstellung ein senkrechter Streifen zugrunde gelegt ist, der sich in horizontaler Richtung gleichmäßig bewegt. Er legt somit von Teilbild zu Teilbild eine gleich große Strecke zurück.

Fig. 7b) stellt mehrere Teilbilder des abgeleiteten Videosignals bei der gleichen Bildvorlage dar. Dabei sind die Inhalte A1, A2, B1, B2 und C1 identisch mit den gleichnamigen Teilbildern des Videosignals. Die Inhalte AX, AY, BX und BY werden wie oben beschrieben aus mehreren Halbbildern abgeleitet. Daraus ergibt sich der in Fig. 7b) gezeigte Bewegungsablauf. Jeweils zwei aufeinander folgende Teilbilder des abgeleiteten Videosignals stellen gleiche Bewegungsphasen dar.

Die Wiedergabe einer Vorlage mit einer vertikalen Bewegung wird im Zusammenhang mit Fig. 8 erläutert. Dabei stellt Fig. 8a) den Bewegungsvorgang bei der Abtastung der Vorlage bzw. bei einer direkten Wiedergabe des durch die Abtastung gewonnenen Videosignals dar, während Fig. 8b) den Einfluß des erfindungsgemäßen Verfahrens auf die Wiedergabe der vertikal bewegten Vorlage verdeutlicht.

Die einzelnen Rechtecke in Fig. 8 stellen jeweils eine Zeile oder Teile einer Zeile in einem Teilbild dar. Es wird eine Vorlage abgetastet, welche einen horizontalen schwarzen Strich bzw. Balken umfaßt, welcher sich derart nach oben bewegt, daß er von Teilbild zu Teilbild gerade eine Zeilenbreite zurück legt. An dieser Stelle ist zu erwähnen, daß dieses Beispiel wie im übrigen auch das im Zusammenhang mit Fig. 7 dargestellte Beispiel einen Sonderfall von einer sehr großen Anzahl von Möglichkeiten darstellt. Die erläuterten Beispiele sollen lediglich das erfindungsgemäße Verfahren verdeutlichen.

Der Fig. 8a) kann nun ohne weiteres entnommen werden, daß der Balken während des Teilbildes A1 von Zeile 7, während des Teilbildes A2 von Zeile 6, während des Teilbildes B1 von Zeile 5 usw. erfaßt wird. Da die Teilbilder TB1 und TB4 des abgeleiteten Videosignals direkt aus den Teilbildern A1 und A2 des Videosignals gewonnen werden, wird in diesen der Balken auch genauso dargestellt wie in den Teilbildern A1 und A2. Durch eine mögliche Interpolation der Signale des Teilbildes A2 entstehen hier für das Teilbild TB2 zwei Zeilen mit jeweils halber Amplitude. Hierbei werden die Signale aus den Teilbildern A1 und B1 nicht berücksichtigt, da sie entweder schwarz oder weiß darstellen und somit das Ausgangssignal des Interpolators zwischen ihnen liegt. Gleiches gilt für das Teilbild TB3.

An der Darstellung gemäß Fig. 8b) ist zu erkennen, daß die Wiedergabe des sich nach oben bewegenden Balkens nach dem erfindungsgemäßen Verfahren abwechselnd in einer Zeile mit voller Amplitude und in zwei Zeilen mit jeweils halber Amplitude erfolgt. Diese Wirkung des Interpolators im Zusammenhang mit dem Medianfilter bedeutet jedoch grundsätzlich keine Verschlechterung der Wiedergabequalität, da mit derartigen Effekten durch die Quantisierung der Bildvorlage, welche in vertikaler Richtung durch die zeilenweise Abtastung erfolgt, ohnehin zu rechnen ist. So würde beispielsweise Fig. 8a) bei halber Geschwindigkeit des Balkens ähnlich aussehen.

## Ansprüche

1. Verfahren zur flimmerfreien Wiedergabe eines Videosignals, bei welchem Vollbilder aus jeweils zwei Teilbildern nach dem Zwischenzeilen-Verfahren zusammengesetzt sind, dadurch gekennzeichnet, daß aus dem Videosignal ein abgeleitetes Videosignal gebildet wird, bei dem die Teilbildfrequenz und die Vollbildfrequenz jeweils um einen Faktor gegenüber denjenigen des Videosignals vergrößert sind, und daß Teilbilder des abgeleiteten Videosignals durch Zeitkompression und durch nichtlineare Mischung aus mehreren aufeinander folgenden Teilbildern des Videosignals gebildet werden.

2. Verfahren nach Anspruch 1, dadurch gekennzeichnet,
daß die Teilbilder des abgeleiteten Videosignals sequentiell aus jeweils einem Teilbild des Videosignals mit gleicher Rasterlage und durch nichtlineare Mischung aus mehreren aufeinander folgenden Teilbildern des Videosignals gebildet werden.

3. Verfahren nach Anspruch 2, dadurch gekennzeichnet,
daß die Teilbildfrequenz und die Vollbildfrequenz des abgeleiteten Videosignals doppelt so groß wie diejenigen des Videosignals sind.

4. Verfahren nach Anspruch 3, dadurch gekennzeichnet,
daß jeweils vier aufeinander folgende Teilbilder des abgeleiteten Videosignals eine Sequenz bilden, daß jeweils das erste und das vierte Teilbild einer Sequenz aus je einem Teilbild des Videosignals mit gleicher Rasterlage gebildet wird und daß das zweite und dritte Teilbild einer Sequenz durch nichtlineare Mischung dreier aufeinander folgender Teilbilder des Videosignals erfolgt, wobei das mittlere Teilbild des Videosignals eine andere Rasterlage aufweist, als das durch die Mischung erzeugte Teilbild des abgeleiteten Videosignals.

5. Verfahren nach Anspruch 4, dadurch gekennzeichnet,
daß die nichtlineare Mischung darin besteht, daß jeweils dasjenige der zu mischenden Signale weitergeleitet wird, dessen Amplitudenwert zwischen den Amplitudenwerten der anderen Signale liegt.

6. Verfahren nach Anspruch 4, dadurch gekennzeichnet,
daß die Signale des jeweils mittleren Teilbildes vor der nichtlinearen Mischung einer Zeileninterpolation unterworfen werden.

7. Verfahren nach Anspruch 1, dadurch gekennzeichnet,
daß in einem Farbfernsehsystem aus einem Leuchtdichtesignal und einem dazugehörigen Farbartsignal nach dem gleichen Verfahren ein abgeleitetes Leuchtdichtesignal und ein abgeleitetes Farbartsignal gebildet werden, wobei die nichtlineare Mischung des Farbartsignals durch aus dem Leuchtdichtesignal abgeleitete Signale gesteuert wird.

8. Schaltungsanordnung zur Durchführung des Verfahrens nach Anspruch 1, dadurch gekennzeichnet, daß mehrere Teilbildspeicher (3, 4, 5, 6) vorgesehen sind, denen die Teilbilder des Videosignals über einen Umschalter (2) in zyklischer Folge zuführbar sind,
daß den Teilbildspeichern (3, 4, 5, 6) zum Einschreiben und zum Auslesen Taktsignale (T1, T2) zugeführt sind, wobei das Taktsignal (T2) zum Auslesen eine höhere Frequenz als das Taktsignal (T1) zum Einschreiben aufweist,
daß die Ausgänge der Teilbildspeicher (3, 4, 5, 6) einerseits mit Eingängen einer Logikschaltung (10) und andererseits mit Eingängen eines weiteren Umschalters (8) verbunden sind und
daß der Ausgang des weiteren Umschalters (8) über einen Interpolator (9) mit einem weiteren Eingang der Logikschaltung (10) verbunden ist.

9. Schaltungsanordnung zur Durchführung des Verfahrens nach Anspruch 5, dadurch gekennzeichnet, daß zur nichtlinearen Mischung jeweils eines der zu mischenden Signale über je einen Schalter (41, 42, 43) einem Ausgang (44) zuführbar ist,
daß für jeweils zwei der zu mischenden Signale ein Komparator (31, 32, 33) vorgesehen ist, an deren Ausgängen (34 bis 39) Signale in Abhängigkeit davon anstehen, ob eines der dem jeweiligen Komparator (31, 32, 33) zugeführten Signale kleiner oder größer als das andere ist oder dem anderen gleicht, und daß die Ausgänge der Komparatoren (31, 32, 33) über eine logische Verknüpfung (40) mit Steuereingängen der Schalter (41, 42, 43) verbunden sind.

10. Schaltungsanordnung nach Anspruch 9, dadurch gekennzeichnet,
daß die logische Verknüpfung (40) von einem programmierbaren Nur-Lese-Speicher (PROM) gebildet ist.

ankommende Teilbilder :

a)

A1    A2    B1    B2    C1    C2 . . . .

t

b)

· TB1  TB2  TB3  TB4  TB1  TB2  TB3  TB4  TB1  TB2  TB3  TB4 . . . .

A1  AX  AY  A2  B1  BX  BY  B2  C1  CX  CY  C2

t

Sequenz ——— Sequenz ——— Sequenz

AX , AY         BX , BY         CX , CY

werden nichtlinear aus drei Teilbildern gebildet

## Fig. 1

ankommende Teilbilder:

a)

A1    A2    B1    B2    C1    C2 . . . .

t

I    I

B1i   B2i

## Fig. 2

TB1  TB2  TB3  TB4

b)

A2  B1  BX  BY  B2  C1

t

I ≙ vertikaler Interpolator

Fig. 3

**Fig.4**

PROM - Tabelle

| Möglichkeiten | Eingänge | | | | | | Ausgänge | | |
|---|---|---|---|---|---|---|---|---|---|
| | A>B | A=B | B>C | B=C | C>A | C=A | 48 | 47 | 46 |
| B>A>C | 0 | 0 | 1 | 0 | 0 | 0 | 1 | 0 | 0 |
| C>A>B | 1 | 0 | 0 | 0 | 1 | 0 | 1 | 0 | 0 |
| A>B>C | 1 | 0 | 1 | 0 | 0 | 0 | 0 | 1 | 0 |
| C>B>A | 0 | 0 | 0 | 0 | 1 | 0 | 0 | 1 | 0 |
| A>C>B | 1 | 0 | 0 | 0 | 0 | 0 | 0 | 0 | 1 |
| B>C>A | 0 | 0 | 1 | 0 | 1 | 0 | 0 | 0 | 1 |
| A=B>C | 0 | 1 | 1 | 0 | 0 | 0 | 1 | 0 | 0 |
| A=B<C | 0 | 1 | 0 | 0 | 1 | 0 | 1 | 0 | 0 |
| A=C>B | 1 | 0 | 0 | 0 | 0 | 1 | 1 | 0 | 0 |
| A=C<B | 0 | 0 | 1 | 0 | 0 | 1 | 1 | 0 | 0 |
| B=C>A | 0 | 0 | 0 | 1 | 1 | 0 | 0 | 1 | 0 |
| B=C<A | 1 | 0 | 0 | 1 | 0 | 0 | 0 | 1 | 0 |
| A=B=C | 0 | 1 | 0 | 1 | 0 | 1 | 0 | 1 | 0 |

**Fig.5**

0 239 800

Fig.6

Fig.7

a) Videosignal

b) abgeleitetes Videosignal

Fig. 8

a) Videosignal

b) abgeleitetes Videosignal

0 239 800